# EUROPEAN PATENT SPECIFICATION

(11) **EP 1 715 443 B1**
(45) Date of publication and mention of the grant of the patent: **05.12.2012**
(21) Application number: 06007135.4
(22) Date of filing: 04.04.2006
(51) Int. Cl.: G06K 9/00

(54) **Biometrics authentication apparatus**
Biometrische Authentifizierungsvorrichtung
Appareil d'authentification biométrique

(30) Priority: 22.04.2005 JP 2005124422
(43) Date of publication of application: 25.10.2006
(73) Proprietor: Hitachi-Omron Terminal Solutions, Corp., Tokyo (JP)
(72) Inventor: Imaizumi, Atsuhiro, Shinagawa-ku Tokyo (JP); Ogata, Hisao, Shinagawa-ku Tokyo (JP)
(74) Representative: Strehl Schübel-Hopf & Partner

(56) References cited:
- WO-A-02/077907
- US-A- 5 828 773
- US-A1- 2004 025 187
- US-A1- 2004 215 615

## Description

### BACKGROUND OF THE INVENTION

The present invention relates to a biometrics authentication apparatus for authenticating a user by using biometric information such as a fingerprint and a vein pattern and a method for registering the biometric information. In particular, the present invention relates to a device and a method for presenting a biological body to an authentication apparatus when acquiring biometric information several times by the authentication apparatus so as to be used as an authentication template.

When withdrawing a deposit in a banking institution or performing electronic transaction using the Internet, it is quite important to authenticate a user for preventing spoofing. As an ordinary authentication method, a card having a magnetic stripe is used in combination with input of a password or a signature on the back of the card is correlated with a signature obtained when a commodity is purchased.

However, such conventional authentication methods have a problem of security. In the case of a cash card having a magnetic strip to be used in combination with input of a password, the magnetic information and the password may be stolen to withdraw deposit. Alternatively, in the case of a signature, a third person may imitate a signature.

In order to solve this problem, there has been suggested introduction of an IC card instead of the card having a magnetic stripe. As compared to the magnetic stripe card, the IC card can assure security because duplication of the IC card is difficult and the internal information cannot be easily stolen. In addition to this, the IC card enables significant increase of the information amount which can be stored in the card. Biometric information such as a fingerprint and a vein pattern is held on an IC card and biometric authentication can be performed by matching the card as is disclosed in JP-A-61-199162 and JP-A-10-312459.

US 2003/0141959 A1 discloses a fingerprint biometric lock which uses an infrared reflective sensor to detect the presence of a finger and describes a three sample enrollment method by which three samples of a fingerprint are registered.

### SUMMARY OF THE INVENTION

According to the aforementioned background of the invention, for example, when biometric information is outputted outside from the device for authentication, it may be stolen and abused by a malicious third person. The individual authentication using biometric information has a higher security as compared to a password and a signature but it also has a negative side that once the biometric information has leaked out, it cannot be modified easily. For this, it becomes especially important that there should be a mechanism for preventing leak out of the biometric information in a form which can be easily used by a third person. Accordingly, when registering biometric information acquired from a biometric authentication apparatus onto an IC card, it is effective to write in the information directly onto the IC card without using a control computer. This can prevent theft of the registered biometric information by a third person who has built an unauthorized mechanism in the control computer.

On the other hand, when storing biometric information from the biometric authentication apparatus directly onto the IC card without using a control computer, there is a minus aspect that it is difficult to check whether the biometric information has been acquired in an appropriate form. Normally, when registering biometric information as reference data for authentication, the biometric information is acquired a plurality of times and an average value of them is used as registration information. Alternatively, an appropriate value among them is selected to be registered. By acquiring the biometric information a plurality of times, it is possible to appropriately introduce perturbation of the biometric information which may occur during authentication into the biometric information to be registered and to exclude inappropriate registration information. This can reduce the authorized person rejection ratio and unauthorized person acceptance ratio during authentication.

For example, in the case of registration of a vein pattern in finger vein authentication, the finger from which a vein pattern is to be acquired is placed over a sensor portion and removed, which operation is repeated a plurality of times. Normally, acquisition of such a pattern is performed in front of an administrator according to a guidance of the administrator. However, in general, a person who is to be authenticated is usually unfamiliar to biometric authentication and handling of the device. For this, the person may continuously places his/her finger over the sensor portion without removing his/her finger from the sensor portion, during which the vein pattern is acquired a plurality of times. In this case, it is impossible to obtain an effect of plural samplings and there arises a problem that it is impossible to generate an appropriate registration pattern. This problem becomes especially obvious when registering biometric information in a consumer transaction facility. That is, in the case of the automatic telling machine, the administrator is not present in front of the user and cannot check visually whether the user appropriately places his/her finger over the sensor portion and removes his/her finger from the sensor portion repeatedly.

It is therefore an object of the present invention to solve at least a part of the aforementioned problems. The object of the present invention is to confirm whether a biological body is appropriately placed over the authentication apparatus a plurality of times when sampling biological information to be registered in the biometrics authentication apparatus.

The present invention provides a biometrics authentication apparatus for authenticating a user by using individual biometric information, the apparatus comprising: a sensor for acquiring biometric information; feature extraction means for extracting a biometric feature used for authentication according to the sensor information acquired; and biometric detection means for detecting whether a biological body is in the held state over the sensor for acquiring the biometric information; and means for obtaining an output of the biometric detection means in order to judge whether a biological body is removed from the sensor for acquiring the biometric information after the biometric feature for registration is acquired by using the sensor for acquiring the biometric information. The invention also provides a terminal device using the authentication apparatus and a consumer transaction facility using the authentication apparatus.

According to this invention, by using a biometric detection function built in a biometrics authentication apparatus during registration of biometric information, it is possible to detect whether a biological body is surely removed after being placed over the authentication apparatus. This can prevent continuous placing of a biological body over the authentication apparatus, which disables appropriate sampling of biological information to be registered. This effect becomes especially large when performing registration of the biometric information by using an automatic device not requiring presence of an administrator.

### BRIEF DESCRIPTION OF THE DRAWINGS

Fig. 1 shows an entire configuration example of a biometric information registration system using a biometrics authentication apparatus.
Fig. 2 shows a configuration example of a biometrics authentication apparatus having an IC card reader to be connected to a control computer.
Fig. 3 is a cross sectional view of a sensor portion of the biometrics authentication apparatus.
Fig. 4 shows a configuration example of a control computer.
Fig. 5 is a flowchart showing a process for registering biometric feature data for biometrics authentication by using a control computer and an IC card reader-equipped biometrics authentication apparatus.

### DESCRIPTION OF THE EMBODIMENTS

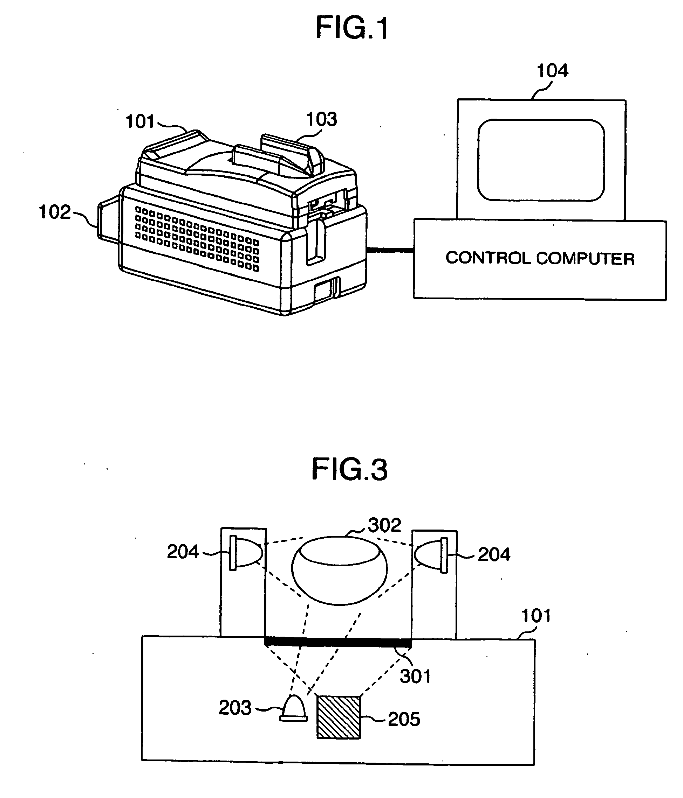

Description will now be directed to an embodiment of the present invention with reference to Figs. 1 to 5.

In this embodiment, explanation will be given on biometric information registration processing using a biometrics authentication apparatus having an IC card reader built in the apparatus to form a unitary block. Here, the biometric information is a biometric feature for identifying an individual person.

In registration of a biometric feature, a biometric feature encrypted for individual authentication is registered on an IC card. A control computer used for registration is connected to a biometrics authentication apparatus equipped with an IC card reader. The biometric feature to be registered is encrypted and transferred from the biometrics authentication apparatus directly to the IC card not passing through the control computer. It should be noted that instead of the IC card, any electronic mobile medium such as an RFID tag or the like can be used.

Fig. 1 shows a configuration example of the entire system. Reference numeral 101 denotes a biometrics authentication apparatus and 102 denotes a sensor portion where a biological body is placed. Numeral 103 denotes an IC card reader for writing biometric information on the IC card.

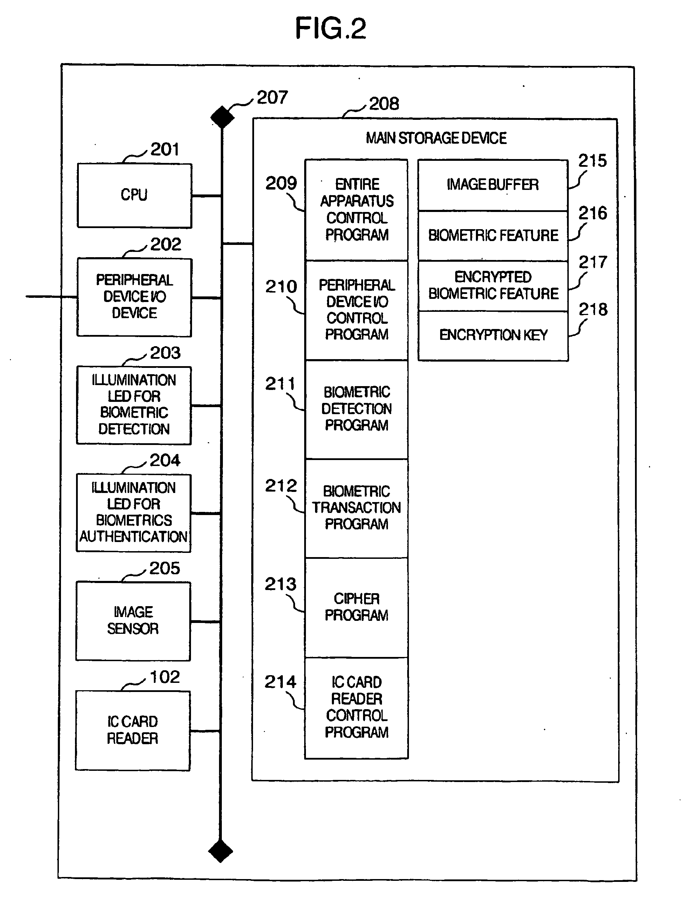

Be referring to Figs. 2, 3, 4 and 5, explanation will be given on the biometric feature registration processing in the system of Fig. 1. Fig. 2 shows a configuration example of the biometrics authentication apparatus 101 and the IC card reader 103. A CPU 201 is a processor for performing data processing in the apparatus and supervising control and processing of various programs and data which will be detailed later. A peripheral device I/O device 202 is an interface for connecting the biometrics authentication apparatus 101 to the control computer 104. Numeral 203 denotes an illumination LED for biometric detection for detecting whether a biological body is placed in the sensor portion 102 or not. Numeral 204 is an illumination LED for acquiring a biometric image. For example, in case of a finger vein authentication, a near-infrared LED appropriate for acquiring a finger vein pattern is used. An image sensor 205 is a sensor for acquiring a biometric image such as a CCD. The sensor acquires a reflected light from the finger illuminated by the LED 203 or acquires a finger vein pattern illuminated by the LED 204. The IC card reader 103 is a device for writing an encrypted biometric feature to be registered, onto the IC card.

A main storage device 208 contains various programs and data areas for operating the apparatus. An entire apparatus control program 209 is a program for controlling the entire authentication apparatus 101 including control of the IC card reader 103. A peripheral device I/O control program 210 controls a peripheral device I/O device 202. A biometric detection program 211 is a program for detecting whether a biological body is placed over the sensor portion 103. The light emitted from the biometric detection LED 203 is applied to the biological body and the reflected light is acquired by the image sensor 205, which detects presence/absence of a biological body. A biometric transaction program 212 causes the image sensor 205 to acquire the biological information obtained by applying the light of the biologics authentication illumination LED 204 to the biological body and processes the biometric image outputted from the image sensor 205, thereby extracting a biometric feature.

A cipher program 213 encrypts the biometric feature to be registered which has been generated by the biometric transaction program 212 before writing it onto the IC card. An IC card reader control program 214 is a program for controlling the IC card reader 102.

Thus, the programs have various functions and perform various processes. As has been described above, the programs are controlled by hardware configuration of the CPU 201. In this invention, explanation will be given mainly on the programs. However, the programs are realized as various functions such as control means, encryption means, authentication means, registration means, and matching means. Each of the means may also be expressed as a unit.

An image buffer 215 is an area for storing biometric image data (raw data) acquired by the image sensor 205. A biometric feature 216 is an area for storing a biometric feature generated by extracting, for example, a vein pattern from the biometric image data stored in the image buffer 214 by the biometric transaction program 212. An encrypted biometric feature 217 is an area for storing data of the biometric feature 216 encrypted by the cipher program 213. Data in 217 (a biometric feature in an encrypted state) is stored as a biometric registration feature on the IC card via the IC card reader 102. It should be noted that even when the control computer 104 is connected between the IC card reader 103 and the authentication apparatus, the biometric feature in the encrypted state acquired by the authentication apparatus is not stored (not left) in a window terminal 104 and registered into the IC card by the IC card reader 102. An encryption key 218 is key data required when the cipher program 213 encrypts or decrypts data. This key data is acquired via a peripheral I/O device from the control computer 104 connected to the biometrics authentication apparatus. Numeral 207 denotes a bus for connecting processors and devices in the authentication apparatus.

Fig. 3 is a cross sectional view of the sensor portion 102 in the biometrics authentication apparatus 101. Numeral 203 is an illumination LED for biometric detection. The illumination LED 203 applies light to a finger 302 as a biological body and detects presence/absence of the finger according to the reflected light intensity. The reflected light is caught by the image sensor 205. Numeral 204 is the illumination LED for biometrics authentication. The illumination LED 204 applies near-infrared light to the sides of the finger 302 so as to catch the vein pattern in the finger by the image sensor 205. Numeral 301 is a visible light cut filter.

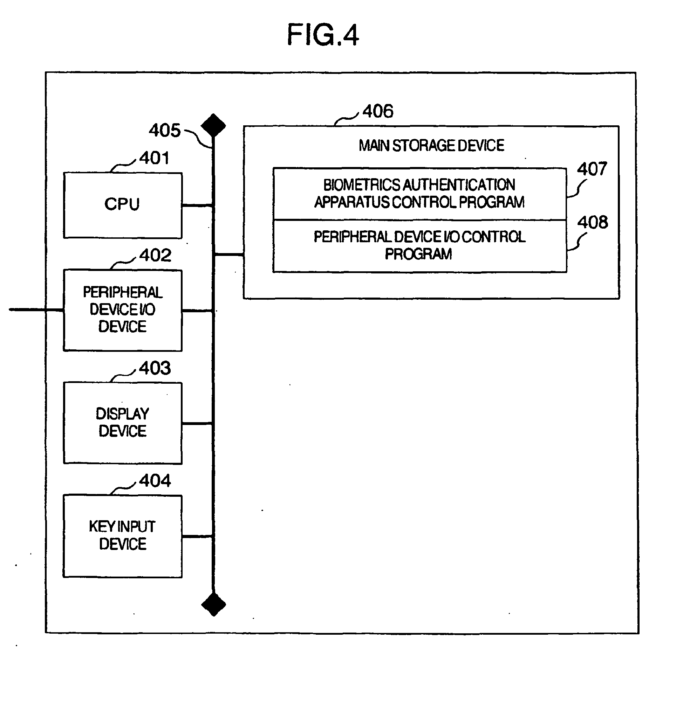

Fig. 4 shows a configuration example of the control computer 104. The CPU 401 is a processor for performing data processing at a terminal and various controls. The peripheral device I/O device 402 is an interface for making a connection to the biometrics authentication apparatus 101. The display device 403 is a monitor for displaying registration result of the biometric feature (successful or unsuccessful result not containing any biometric feature) and guidance to an operator operating the control computer. The key input device 305 is a key input device for the operator. The main storage device 406 contains various programs. A biometrics authentication apparatus control program 407 is a program for controlling the biometrics authentication apparatus 101 connected via the peripheral device I/O device 402. A peripheral device I/O control program 408 controls the peripheral device I/O device 402. Numeral 405 denotes a bus for connecting various devices in the terminal.

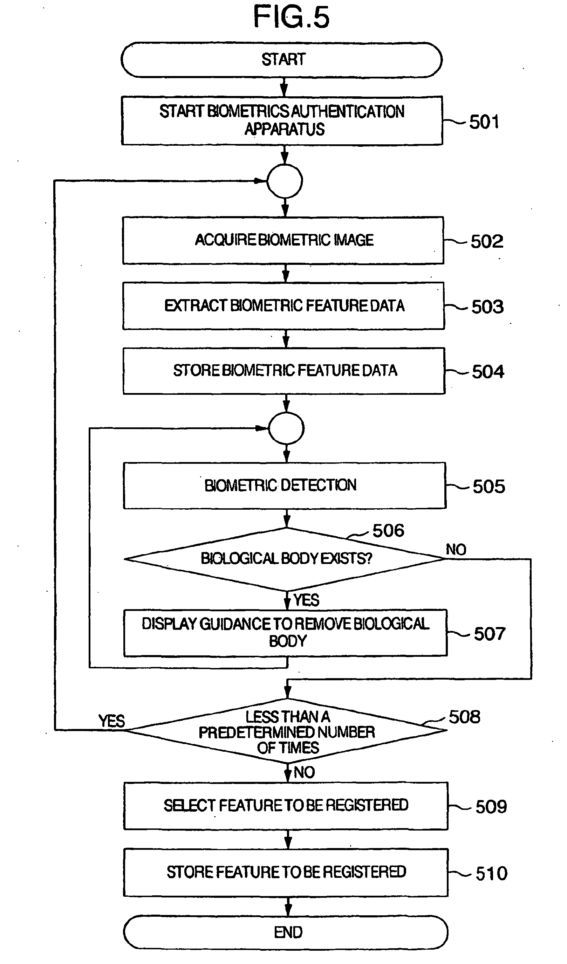

Referring to Fig. 5, explanation will be given on the operation of the biometrics authentication apparatus 101 having the IC card reader 103 and the control computer 104. Steps 506, 507 and 508 represent contents of processes performed by the biometrics authentication apparatus 101 according to an instruction outputted from the control computer 104.

When an item of biometrics authentication registration displayed on the display device 403 of the control computer 104 is selected on the input device 404, the biometrics authentication apparatus control program 407 exhibits functions concerning biometrics authentication in the biometrics authentication apparatus 101. In step 501, the biometrics authentication apparatus control program 407 stored in the control computer 104 transmits a biometric feature registration process start signal to the IC card reader-equipped biometrics authentication apparatus 101. The biometrics authentication apparatus 101 starts operation in the CPU 201 by the received start signal.

The biometric transaction program 212 controls the illumination LED 204 for biometrics authentication and the image sensor 205 so as to acquire a biometric image and store it in the image buffer 215 (502). After this, the biometric transaction program 212 reads out the biometric image from the image buffer 215, extracts a biometric feature to be registered on the IC card and feature data for selecting a feature to be registered, from the image, and stores the result in the biometric feature 216 (503). It should be noted that the selection of a feature to be registered means selection from data which is repeatedly registered in step 509 which will be detailed later. Here, the feature data is, in the case of a finger, data serving as a reference for selecting a biometric feature appropriate for registering a finger inclination. It should be noted that a biometric feature will also be simply referred to as biometric information. The biometrics authentication apparatus has acquisition means or an acquisition unit for acquiring biometric information.

The entire apparatus control program 209 starts the cipher program 213. The program 214 encrypts the biometric feature 216 using the encryption key 218 and stores the result in the encrypted biometric feature 217 (504).

Next, the biometric detection program 211 judges whether the finger as a biological body is removed from the authentication device by using the illumination LED 203 for biometric detection and the image sensor 205 (505). As shown in Fig. 3, the light emitted from the LED 203 is reflected by the finger 302 and the reflected light intensity is caught by the image sensor 205, thereby judging whether the finger is kept over the authentication device or removed from it. Whether the finger is removed or not may be judged by using at least one LED 204 in place of the LED 203 so that LED 204 irradiates the light on the target finger.

The reflected light intensity may be measured by various methods. As an example, the following method may be employed. Suppose that the image sensor 205 outputs an image in which each pixel value is an 8-bit gradation image and black has a value zero and white has a value 255. When the biometric body exists in the vicinity and the reflected light from it is caught, the number of pixels having a pixel value near 255 increases. On the other hand, when the biological body is removed, the number of pixels having a value near 255 decreases. A threshold value concerning the pixel value is set in the biometric detection program 211, so that the number of pixels having a value exceeding the threshold value is counted. When the number of the pixels has exceeded a certain value, the biometric detection program 211 judges that a biological body exists in the vicinity of the authentication apparatus and outputs "a biological body present". Otherwise, the biometric detection program 211 outputs "a biological body absent". The biometric information outputted from the biometric detection program 211 according to such a process is transmitted from the biometrics authentication apparatus 101 to the control computer 104 via the peripheral device I/O device 202.

The control computer 104 receives the biometric detection information transmitted from the biometrics authentication apparatus 101. If judgment is "a biological body present", control is passed to step 507. Otherwise, control is passed to step 508. When the judgment is "a biological body present", the display device 403 displays a guidance to remove the finger as a biological body from the biometrics authentication apparatus 101 and the operator prompts the user to remove his/her finger from the apparatus (507). After this, steps 505 to 507 are repeated until the moment that the biometrics authentication apparatus 101 does not detect that the finger is removed.

The control computer 104 causes the biometrics authentication apparatus 101 to repeatedly execute the processes of steps 502 to 507 until a predetermined number of times is reached and stores the results in the encrypted biometric feature 217 (508). According to an instruction from the control computer 104, the biometric transaction program 212 selects an encrypted registration feature to be registered in the IC card from the data in 217 according to the feature data (reference data) extracted in step 503 (509).

Under the instruction from the window terminal 105, the entire apparatus control program 209 writes the selected encrypted registration feature in the IC card reader 102 via the IC card reader control program 214 (510). It should be noted that the aforementioned case explains an example where various processes are executed by the instruction of the control computer 104. However, these processes may be executed automatically within the authentication apparatus.

By the processes of the aforementioned steps 501 to 510, each time a biometric feature is acquired, the biological body is surely removed from the biometrics authentication apparatus 101, so that an appropriate perturbation for registration can be contained in the biometric feature.

In the aforementioned example, explanation has been given on a method for registering a biometric feature onto the IC card by the biometrics authentication apparatus connected to the control computer. However, the registration may also be performed by a biometrics authentication apparatus connected to an unmanned consumer transaction facility. In this case, the guidance displayed on the display device 403 is displayed directly to a user who wants to make registration. The user who wants to register biometric information is usually unfamiliar to the use of the biometrics authentication apparatus. Accordingly, in the unmanned consumer transaction facility, it is indispensable to detect whether biological body is surely placed over and removed from the apparatus during registration of the biometric feature and display a guidance to the user if the operation is inappropriate. Thus, even when making registration by an unmanned automatic device, it is possible to prevent registration of an inappropriate biometric feature.

Moreover, in the aforementioned embodiment, the biometrics authentication apparatus 101 is connected to the control computer (terminal device) 104 for registering biometric information onto an IC card. These altogether may be called a biometrics authentication apparatus or a biometrics registration apparatus.

## Claims

1. A finger vein authentication apparatus (101) for extracting and registering a finger vein feature, the apparatus comprising:
an image sensor (205) for acquiring an image of a finger (302);
feature extraction means for extracting the finger vein feature from the image acquired by the image sensor (205);
memory means (208) for memorizing the extracted feature;
controlling means controlling the image sensor (205) and the feature extraction means;
irradiating means (203, 204) for irradiating light on the finger; and
biometric detection means (205) for detecting and judging whether the finger (302) is held over the image sensor (205) or is removed therefrom by capturing light reflected from the finger and comparing number of pixels of the the image acquired by the image sensor (205) that satisfy a predetermined condition with a threshold value each time the finger vein feature is acquired,
wherein the controlling means is adapted to judge whether a predetermined number of the acquisitions of the finger vein feature has been executed after the finger (302) has been removed from the finger vein authentication apparatus (101) and to execute acquisition of the finger vein feature again if the predetermined number has not been reached.

2. The apparatus of claim 1, further comprising:
encryption means for encrypting the acquired finger vein feature; and
means for outputting (102) the encrypted finger vein feature directly onto an IC card.

3. The apparatus of claim 1 or 2, further comprising display means (403) for displaying a guidance,
wherein, if it is judged that the finger (302) is in the held state according to the output of the biometric detection means (205), the display means (403) is adapted to display a guidance to prompt the user to remove the finger (302) from the apparatus (101).

## Patentansprüche

1. Fingervenen-Authentifizierungsvorrichtung (101) zum Gewinnen und Aufzeichnen eines Fingervenenmerkmals, aufweisend:
einen Bildsensor (205) zum Gewinnen eines Bilds eines Fingers (302),
eine Merkmalsgewinnungseinrichtung zum Gewinnen des Fingervenenmerkmals aus dem vom Bildsensor (205) gewonnenen Bild,
eine Speichereinrichtung (208) zum Speichern des gewonnenen Merkmals,
eine Steuereinrichtung zum Steuern des Bildsensors (205) und der Merkmalsgewinnungseinrichtung,
eine Bestrahlungseinrichtung (203, 204) zum Strahlen von Licht auf den Finger, und
eine biometrische Erfassungseinrichtung (205) zum Erfassen und Beurteilen, ob der Finger (302) über dem Bildsensor (205) gehalten wird oder von ihm entfernt wird, indem vom Finger reflektiertes Licht erfasst und jedesmal, wenn das Fingervenenmerkmal gewonnen wird, die Anzahl an Pixeln des vom Bildsensor (205) gewonnenen Bilds, die eine vorbestimmte Bedingung erfüllen, mit einem Schwellenwert verglichen wird,
wobei die Steuereinrichtung eingerichtet ist zu beurteilen, ob eine vorbestimmte Anzahl der Gewinnungen des Fingervenenmerkmals ausgeführt wurde, wenn der Finger (302) von der Fingervenen-Authentifizierungsvorrichtung (101) entfernt wurde, und die Gewinnung des Fingervenenmerkmals erneut auszuführen, wenn die vorbestimmte Anzahl noch nicht erreicht wurde.

2. Vorrichtung nach Anspruch 1, weiterhin aufweisend:
eine Verschlüsselungseinrichtung zum Verschlüsseln des gewonnenen Fingervenenmerkmals, und
eine Einrichtung zum Ausgeben (102) des verschlüsselten Fingervenenmerkmals direkt an eine IC-Karte.

3. Vorrichtung nach Anspruch 1 oder 2, mit einer Anzeigeeinrichtung (403) zum Anzeigen eines Hinweises,
wobei dann, wenn entsprechend der Ausgabe der biometrischen Erfassungseinrichtung (205) beurteilt wird, dass sich der Finger (302) in dem gehaltenen Zustand befindet, die Anzeigeeinrichtung (403) eingerichtet ist, einen Hinweis anzuzeigen, um den Benutzer aufzufordern, den Finger (302) von der Vorrichtung (101) zu entfernen.

## Revendications

1. Dispositif d'authentification des veines d'un doigt (101) pour extraire et enregistrer une caractéristique des veines d'un doigt, le dispositif comportant :
un capteur d'image (205) pour acquérir une image d'un doigt (302),
des moyens d'extraction de caractéristiques pour extraire la caractéristique des veines d'un doigt à partir de l'image acquise par le capteur d'image (205),
des moyens de mémoire (208) pour mémoriser la caractéristique extraite,
des moyens de commande commandant le capteur d'image (205) et les moyens d'extraction de caractéristiques,
des moyens d'irradiation (203, 204) pour irradier de la lumière sur le doigt, et
des moyens de détections biométrique (205) pour détecter et déterminer si le doigt (302) est maintenu sur le capteur d'image (205) ou est retiré de celui-ci en capturant la lumière réfléchie par le doigt et en la comparant au nombre de pixels de l'image acquise par le capteur d'image (205) qui satisfait à une condition prédéterminée ayant une valeur de seuil à chaque fois que la caractéristique de veines d'un doigt est acquise,
dans lequel les moyens de commande sont adaptés pour déterminer si un nombre prédéterminé des acquisitions de la caractéristique de veines d'un doigt a été exécuté une fois que le doigt (302) a été retiré du dispositif d'authentification des veines d'un doigt (101) et pour effectuer à nouveau l'acquisition de la caractéristique des veines d'un doigt si le nombre prédéterminé n'a pas été atteint.

2. Dispositif selon la revendication 1, comportant en outre :
des moyens de cryptage pour crypter la caractéristique des veines d'un doigt acquise, et
des moyens pour délivrer en sortie (102) la caractéristique des veines d'un doigt cryptée directement sur une carte à circuit intégré.

3. Dispositif selon la revendication 1 ou 2, comportant en outre des moyens d'affichage (403) pour afficher des conseils,
dans lequel, si il est déterminé que le doigt (302) est dans l'état maintenu conformément à la sortie des moyens de détection biométrique (205), les moyens d'affichage (403) sont adaptés pour afficher des conseils afin d'inviter l'utilisateur à retirer le doigt (302) du dispositif (101).
